# EUROPÄISCHE PATENTSCHRIFT

(11) **EP 2 610 521 B1**
(45) Veröffentlichungstag und Bekanntmachung des Hinweises auf die Patenterteilung: **20.02.2019**
(21) Anmeldenummer: 12199383.6
(22) Anmeldetag: 27.12.2012
(51) Int. Cl.: F16F 7/12, B60R 19/34

(54) **Vorrichtung mit einstellbarer Steifigkeit zum Aufnehmen einer Aufprallkraft und Verfahren zum Erfassen einer Aufprallkraft**
Device with adjustable rigidity for absorbing an impact force and method for sensing an impact force
Dispositif ayant une raideur réglable pour la réception d'une force de choc et procédé de détection d'une force de choc

(30) Priorität: 27.12.2011 DE 102011089937
(43) Veröffentlichungstag der Anmeldung: 03.07.2013
(73) Patentinhaber: ROBERT BOSCH GMBH, 70442 Stuttgart (DE)
(72) Erfinder: Holz, Dieter, 71563 Affalterbach (DE)

(56) Entgegenhaltungen:
- DE-A1-102009 044 966
- DE-A1-102010 001 990
- DE-A1-102011 005 045

## Beschreibung

### Stand der Technik

Die vorliegende Erfindung bezieht sich auf eine Vorrichtung mit einstellbarer Steifigkeit zum Aufnehmen einer Aufprallkraft, auf ein Verfahren zum Erfassen einer Aufprallkraft, auf ein entsprechendes Steuergerät sowie auf ein entsprechendes Computerprogrammprodukt.

Zum Schutz von Fahrzeuginsassen bei Kollisionen werden häufig Crashboxen bzw. Aufprallstrukturen eingesetzt. Diese ersetzen Strukturen im Vorderwagen und/oder im Heck eines Fahrzeugs und können nach einem Unfall ausgetauscht werden.

Die EP 1 792 786 A2 zeigt eine Crashbox zur Eingliederung zwischen einem Stoßfängerquerträger und einem Fahrzeuglängsträger eines Kraftfahrzeugs. Die Crashbox weist ein gehäuseartiges Deformationsprofil als Faltkonstruktion aus Metallblech und eine längsträgerseitige Flanschplatte auf, die als Bestandteil der Faltkonstruktion ausgebildet ist.

DE 10 2009 044 966 A1 zeigt eine Vorrichtung mit einstellbarer Steifigkeit zum Aufnehmen einer Aufprallkraft mit den Merkmalen des Oberbegriffs des Anspruchs 1.

### Offenbarung der Erfindung

Vor diesem Hintergrund wird mit der vorliegenden Erfindung eine Vorrichtung mit einstellbarer Steifigkeit zum Aufnehmen einer Aufprallkraft, ein Verfahren zum Erfassen einer Aufprallkraft, weiterhin ein Steuergerät, das dieses Verfahren verwendet sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Eine adaptive Crashstruktur kann auf Basis eines Verjüngungsabsorbers arbeiten. Hier wird bei einer Kollision ein Deformationselement, z.B. ein Rohr, durch eine oder mehrere in einem Gehäuse angeordnete Matrizen geschoben und dabei verformt bzw. verjüngt, um so die Aufprallenergie wirkungsvoll abzubauen. Durch eine wirksame Zu- und Abschaltung von Matrizenplatten kann der Verjüngungsdurchmesser variiert und somit ein Kraftniveau der Crashstruktur angepasst werden. Eine für eine zweite Verjüngungsstufe der Struktur verwendete Matrize kann ausrückbar sein, d. h., bei Wegnahme einer Abstützung durch eine Radialkraft des Deformationselements nach außen gedrückt werden. Ist die ausrückbare Matrize ausgerückt, so ist das Kraftniveau der Crashstruktur niedriger und es wird weniger Aufprallenergie abgebaut, als wenn die ausrückbare Matrize nicht ausgerückt ist.

Beispiele für eine Umsetzung des Prinzips einer adaptiven Crashstruktur finden sich z.B. in einer Crashstruktur mit adaptiver Energieaufnahme durch ein Entfernen von Versteifungsrippen durch Schneidearbeit oder durch Verjüngung. Eine adaptive Crashbox kann einen integrierten Drucksensor aufweisen oder alternativ eine Sensorkonfiguration, die mit Hilfe von zwei Beschleunigungssensoren eine Soll-Steifigkeit der adaptiven Crashbox bestimmt und auch die Rückhaltemittel der passiven Sicherheit auslöst. Es besteht in diesem Zusammenhang die Möglichkeit einer Umsetzung einer schnellen und genauen Aktuatorik für eine in der Steifigkeit veränderbare Crashstruktur. Eine adaptive Crashstruktur kann einen Wirbelstromaktuator oder ein elastisches Element mit einem integrierten Sensor aufweisen. Ferner besteht die Möglichkeit einer Sensierung der Kollisionsschwere mithilfe definiert versagender Verbindungselemente und eines Auslösens reversibler Crashstrukturen anhand der Erkennung einer Mindestschwere.

Mit einer Ausstattung einer Insassenschutzanordnung mit einem Sensorelement, das Kräfte, die höher sind als das untere Kraftniveau der Anordnung, erkennt, können Fehlauslösungen verhindert werden. Dies kann neben einer Reduzierung von Reparaturkosten einen Einsatz von irreversiblen Aktuatoren - die beispielsweise mittels Pyrotechnik angesteuert werden - ermöglichen.

Ein gemäß dem hier vorgeschlagenen Konzept entworfener Aufbau ermöglicht in einer kompakten Bauweise die Übertragung von Crashkräften vom Deformationselement bzw. Absorberrohr auf einen Fahrzeuglängsträger.

Vorteilhafterweise wird der hier vorgeschlagene Mechanismus nicht von Druckwellen wie beim Drucksensor oder durch Erschütterungen wie beim Beschleunigungssensor beeinflusst. Der hier vorgestellte Ansatz kann zusätzlich zur Abstützung der zweiten Verjüngungsstufe des Aktuators von adaptiven Crashstrukturen eingesetzt werden. Es kann eine benötigte Aktuierungsenergie reduziert werden, was einen direkten Einfluss auf die Kosten der elektrischen und elektronischen Bauteile hat. Weiterhin ergeben sich Bauraum-Vorteile.

Die vorliegende Erfindung schafft eine Vorrichtung mit einstellbarer Steifigkeit zum Aufnehmen einer Aufprallkraft, wobei die Vorrichtung ein Gehäuse mit einer in dem Gehäuse angeordneten ausrückbaren Matrize zum Aufnehmen und Deformieren eines Deformationselements aufweist, wenn das Deformationselement in einer durch die Aufprallkraft bedingten Vorschubrichtung bewegt wird, und wobei die Vorrichtung das folgende Merkmal aufweist:
ein angrenzend an die ausrückbare Matrize angeordnetes Detektorelement zum Erfassen eines Erreichen oder eines Überschreitens eines durch eine auf die ausrückbare Matrize wirkende Ausrückkraft bedingten vorbestimmten Verschiebeweges der ausrückbaren Matrize.

Die Vorrichtung kann in einem Fahrzeug zum Schutz der Insassen bei einer Kollision des Fahrzeugs mit einem stationären Objekt oder einem beweglichen Objekt, wie beispielsweise einem weiteren Fahrzeug, installiert sein. Beispielsweise kann die Vorrichtung einen Längsträger oder Teil eines Längsträgers des Fahrzeugs ersetzen. Bei der Vorrichtung kann es sich um eine Crashstruktur wie z.B. einen Verjüngungsabsorber handeln. Der Verjüngungsabsorber kann auf dem Prinzip einer Verformung, hier Verjüngung, des Deformationselements basieren. Dabei kann zumindest ein Anteil der Aufprallkraft zur Verformung des Deformationselements eingesetzt und dadurch aufgenommen und abgebaut werden. Auf diese Weise kann die mit der Aufprallkraft zusammenhängende Aufprallenergie absorbiert werden. Die Aufprallkraft kann durch eine Schwere der Kollision bestimmt sein. Um so schwerer die Kollision ist, umso größer ist die dabei auftretende Aufprallkraft und die während der Kollision abzubauende Aufprallenergie. Eine Größe der Aufprallkraft kann durch eine Fahrgeschwindigkeit und/oder eine Fahrtrichtung des Fahrzeugs und/oder des beweglichen Objekts bestimmt sein. So kann sich beispielsweise eine Aufprallkraft eines Frontalcrashs von der eines Schrägcrashs unterscheiden. Die Steifigkeit kann in Abhängigkeit von der basierend auf der Aufprallkraft ermittelten Kollisionsschwere hoch oder niedrig eingestellt sein. Entsprechend kann die Vorrichtung bei einer schweren Kollision und somit einer großen Aufprallkraft eine hohe Steifigkeit aufweisen, also auf eine hohe Kraftstufe eingestellt sein. In diesem Fall wird ein Ausrücken der ausrückbaren Matrize begrenzt. Bei einer hohen Steifigkeit wird ein großer Anteil der Aufprallkraft zur Verformung des Deformationselements eingesetzt. Daraus folgt eine umfangreiche Verformung des Deformationselements, wodurch viel Aufprallenergie abgebaut werden kann. Bei einer leichten Kollision kann die Vorrichtung eine niedrige Steifigkeit aufweisen, also auf eine untere Kraftstufe eingestellt sein. In diesem Fall kann die ausrückbare Matrize weiter als bei der hohen Steifigkeit ausrücken. Entsprechend kann die Verformung des Deformationselements gering sein, da weniger Aufprallenergie absorbiert werden muss. Die Vorrichtung kann in einem Vorderwagen und/oder in einem Heck des Fahrzeugs angeordnet sein.

Das Gehäuse kann beispielsweise aus zwei Gehäusehälften zusammengesetzt sein, wobei die eine Gehäusehälfte eine Öffnung zum Aufnehmen des Deformationselements in das Gehäuse und die andere Gehäusehälfte eine der Öffnung gegenüberliegende weitere Öffnung für einen Austritt des Deformationselements aus dem Gehäuse aufweisen kann. Das Gehäuse kann das Deformationselement oder Teile desselben bei der Bewegung des Deformationselements durch das Gehäuse vollumfänglich umschließen. Für die Unterbringung der ausrückbaren Matrize im Inneren des Gehäuses kann das Gehäuse eine Auswölbung aufweisen.

Die ausrückbare Matrize kann beispielsweise in Form eines Ringes ausgebildet sein, dessen Öffnung zu dem Deformationselement ausgerichtet ist. Ein lichtes Innenmaß der ausrückbaren Matrize in Ringform kann zumindest teilweise geringer als ein Querschnitt des Deformationselements vor Eintritt in einen Deformationsabschnitt bzw. Verjüngungsabschnitt der ausrückbaren Matrize sein. Die ausrückbare Matrize kann ausgebildet sein, um beim Eindringen des Deformationselements auszurücken, wenn die Vorrichtung nicht auf die höchste Steifigkeit eingestellt ist. Die ausrückbare Matrize kann so in dem Gehäuse angeordnet sein, dass eine Außenwand der ausrückbaren Matrize von einer Innenwand des Gehäuses beabstandet ist. Beim Ausrücken kann die ausrückbare Matrize durch eine Radialkraft des eindringenden Deformationselements von dem Deformationselement weggedrückt, also zu der Innenwand des Gehäuses hingedrückt werden. Durch das Zurückweichen der ausrückbaren Matrize wird keine Verjüngung des Deformationselements bewirkt. Eine solche Bewegung der ausrückbaren Matrize, die im Wesentlichen quer zur Vorschubrichtung erfolgt, wird in der vorliegenden Beschreibung als "Ausrücken" der Matrize bezeichnet. Die Innenseite bzw. die Innenseiten der ausrückbaren Matrize können beispielsweise ganz oder teilweise schräg verlaufen, sodass die ausrückbare Matrize eine Art Trichter bildet, der zu der Verjüngung des Deformationselements führen kann, während sich dieses aufgrund der Kollision an der Innenseite der ausrückbaren Matrize entlang bewegt.

Das Deformationselement kann als ein längliches Bauteil mit beispielsweise rundem Querschnitt ausgebildet sein. Ansprechend auf die Kollision kann das Deformationselement in der Vorschubrichtung entlang seiner Längsachse durch das Gehäuse bewegt und dabei bei hoher eingestellter Steifigkeit der Vorrichtung durch die ausrückbare Matrize aufgenommen und deformiert bzw. verjüngt werden, um zumindest einen Teil der Aufprallkraft zu absorbieren. Die Vorschubrichtung kann einer Fahrtrichtung des Fahrzeugs entgegengerichtet sein. Die Vorschubrichtung kann im Wesentlichen einer Aufprallrichtung auf das Fahrzeug entsprechen.

Bei dem Detektorelement kann es sich z.B. um einen Sensor handeln. Das Detektorelement kann z.B. so innerhalb des Gehäuses der Vorrichtung angeordnet sein, dass es an einer Außenwand der ausrückbaren Matrize anliegt. Der Vorgang des Erfassens kann beispielsweise erfolgen, indem das Detektorelement bei Erreichen oder Überschreitung des vorbestimmten Verschiebeweges der ausrückbaren Matrize ein Signal an ein Steuergerät des Fahrzeugs ausgibt. Die Ausrückkraft kann der Radialkraft des eindringenden Deformationselements entsprechen und somit orthogonal zu der Aufprallkraft gerichtet sein. Zumindest ein Teil der Aufprallkraft wird somit umgeleitet und wirkt als Ausrückkraft auf die ausrückbare Matrize. Das Detektorelement wirkt mit einer Haltekraft der Ausrückkraft entgegen und verhindert ein Ausrücken der ausrückbaren Matrize über einen vorbestimmten Verschiebeweg hinaus. Überschreitet die Ausrückkraft die Haltekraft des Detektorelements, so kann die ausrückbare Matrize über den vorbestimmten Verschiebeweg hinaus ausrücken. Dieses Ausrücken über den vorbestimmten Verschiebeweg hinaus kann durch das Detektorelement erfasst werden. Dadurch kann mittels des Detektorelements indirekt erfasst werden, dass die durch die von der Aufprallkraft abhängige Ausrückkraft die Haltekraft erreicht oder überschritten hat. Somit kann bei entsprechend geringer Ausrückkraft die ausrückbare Matrize oder zumindest ein Teil dieser einen Teil des Verschiebewegs in radialer Richtung nach außen zurücklegen, ohne ein Ansprechen des Detektorelements zu bewirken. Somit kann der Verschiebeweg einen freien radialen Verschiebeweg der ausrückbaren Matrize repräsentieren. Das Detektorelement kann ausgebildet sein, um ein Erreichen oder Überschreiten des Verschiebeweges zu erfassen und so eine untere Kraftstufe der Vorrichtung zu markieren.

Gemäß einer Ausführungsform kann das Detektorelement ausgebildet sein, um ansprechend auf das Erreichen oder Überschreiten des vorbestimmten Verschiebeweges aufgrund einer vorbestimmten Ausrückkraft ein Aufprallsignal auszugeben. Vorteilhafterweise kann so auf einfache und effiziente Weise unterschieden werden, ob es sich bei einem Ereignis um einen Aufprall handelt, der eine Aktivierung von Insassenschutzmitteln des Fahrzeugs erforderlich macht, oder ob es sich beispielsweise um einen unfalltechnisch unbedeutenden Stoß auf das Fahrzeug handelt. Eine derartige Plausibilisierungsmaßnahme ermöglicht beispielsweise einen Einsatz irreversibler Aktoren für eine Einstellung der geeigneten Kraftstufe der Vorrichtung.

Gemäß einer weiteren Ausführungsform kann das Detektorelement einen elektrischen Leiter aufweisen. Dieser kann ausgebildet ist, um das Aufprallsignal durch ein Reißen bei dem Erreichen oder Überschreiten des vorbestimmten Verschiebeweges zu erzeugen. Beispielsweise kann der elektrische Leiter so angeordnet sein, dass er vollständig in ein Material des Detektorelements eingearbeitet ist. Mit dieser Ausführungsform kann vorteilhafterweise eine besonders kurze Ansprechzeit des Detektorelements realisiert werden.

Beispielsweise kann das Detektorelement als ein die ausrückbare Matrize vollumfänglich umgebender Detektorring mit mindestens einer Sollbruchstelle ausgebildet sein. Der Detektorring kann ausgebildet sein, um bei dem Erreichen oder Überschreiten des vorbestimmten Verschiebeweges an der Sollbruchstelle zu brechen. Der Detektorring kann beispielsweise als ein Kunststoffspritzteil ausgebildet sein und in zusätzlicher Funktion in der Ruhestellung der Vorrichtung die ausrückbare Matrize vor Verschmutzung schützen, indem eine Höhe des Detektorrings einer Höhe der ausrückbaren Matrize entspricht. Durch die Sollbruchstellen kann das Brechen des Detektorringes kontrolliert an einer geeigneten Stelle erfolgen. Beispielsweise kann der Detektorring eine Mehrzahl von gleichmäßig beabstandeten Sollbruchstellen aufweisen, damit der Detektorring über seinen Umfang hinweg gleichmäßig brechen kann.

Ferner kann die Vorrichtung zumindest einen sich in der Vorschubrichtung erstreckenden Brechstift zum Abstützen bzw. Freigeben der ausrückbaren Matrize aufweisen. Dabei kann der Brechstift in zumindest einer sich in der Vorschubrichtung in einem Außenbereich der ausrückbaren Matrize erstreckenden Nut angeordnet und zwischen zwei Positionen bewegbar sein. Ein Abstand zwischen dem Brechstift und einem Boden der Nut kann in einer Grundstellung der Vorrichtung größer oder gleich einer Länge des vorbestimmten Verschiebeweges sein. Die Grundstellung kann einem Grundzustand der Vorrichtung entsprechen, in der keine Aufprallkraft auf die Vorrichtung wirkt. Der Brechstift kann eine Sollbruchstelle aufweisen und ausgebildet sein, um in einer ersten Position die ausrückbare Matrize gegenüber der Radialkraft des Deformationselements abzustützen und in einer zweiten Position ein Ausrücken der ausrückbaren Matrize freizugeben, wobei in der zweiten Position die Sollbruchstelle auf einer Höhe mit einem oberen oder unteren Abschluss der ausrückbaren Matrize liegen kann, sodass der Brechstift an der Sollbruchstelle bricht und die Matrize ausrücken kann. Der Abstand zwischen Nutboden und Brechstift ermöglicht ein vorbestimmtes geringes Ausrücken der ausrückbaren Matrize in einem Bereich der Aufprallkraft auf das Fahrzeug, der für eine Kollision zu gering ist. So kann wirksam sichergestellt werden, dass ein unfalltechnisch irrelevanter Stoß auf das Fahrzeug nicht zu einer unnötigen Aktivierung von Schutzmitteln führt. So können vorteilhaft ohne Sicherheitseinbußen überflüssige Reparaturkosten und -zeit eingespart werden.

Beispielsweise kann die ausrückbare Matrize durch eine Mehrzahl von zueinander beweglichen ausrückbaren Matrizensegmenten mit je einer sich in der Vorschubrichtung in einem Außenbereich des ausrückbaren Matrizensegments erstreckenden Nut gebildet sein. Ferner kann die Vorrichtung eine der Mehrzahl von Matrizensegmenten entsprechende Mehrzahl von Brechstiften aufweisen, von denen jeder in einer Nut eines der Matrizensegmente angeordnet ist. Die einzelnen Matrizensegmente können eine identische Form aufweisen. Beispielsweise kann die ausrückbare Matrize aus drei Matrizensegmenten mit je einem Brechstift zusammengesetzt sein. Diese Ausführungsform bietet den Vorteil, dass die Matrize gleichmäßig ausrücken kann und so ein Verkanten des Deformationselements beim Einrücken desselben in das Gehäuse wirksam vermieden werden kann.

Gemäß einer weiteren Ausführungsform kann die Vorrichtung ferner eine Stützeinrichtung und eine nicht-ausrückbare Matrize aufweisen. Dabei können die nicht-ausrückbare Matrize, die ausrückbare Matrize und die Stützeinrichtung in der Vorschubrichtung aufeinanderfolgend in dem Gehäuse angeordnet sein. Ferner kann die Stützeinrichtung zumindest ein sich zwischen der Stützeinrichtung und der nicht-ausrückbaren Matrize erstreckendes Befestigungselement zum Befestigen der nicht-ausrückbaren Matrize an der Stützeinrichtung und eine Anschlussgeometrie zum Übertragen zumindest eines Teils der Aufprallkraft auf einen der Stützeinrichtung in der Vorschubrichtung nachgelagerten Fahrzeuglängsträger aufweisen. Die nicht-ausrückbare Matrize kann zum Aufnehmen und Deformieren des Deformationselements eingesetzt werden. Sie kann in der niedrigen Kraftstufe der Vorrichtung alleine und in der hohen Kraftstufe gemeinsam mit der ausrückbaren Matrize zum Energieabbau durch Verjüngung Einsatz finden. Entsprechend kann die nicht-ausrückbare Matrize durch das Deformationselement unzerstörbar, also aus einem robusteren Material als dieses gebildet sein. Beispielsweise kann die Stützeinrichtung als ein Ring ausgebildet sein, auf dem sich die ausrückbare Matrize abstützt. Die Stützeinrichtung kann eine Mehrzahl von sich entgegen der Vorschubrichtung erstreckenden Stegen aufweisen. Diese können beispielsweise zwischen einzelnen Segmenten der ausrückbaren Matrize angeordnet sein. Beispielsweise kann die Vorrichtung eine der Mehrzahl von Stegen entsprechende Mehrzahl von Befestigungselementen, z.B. Schrauben, aufweisen, die sich innerhalb der Stege bis in einen Bodenbereich der nicht-ausrückbaren Matrize erstrecken, um diese zu befestigen und abzustützen. Diese Ausführungsform bietet den Vorteil, dass so ein Anteil der Aufprallkraft, der nicht von dem Deformationselement aufgenommen werden kann, wirksam an einen hinter der Vorrichtung angeordneten Längsträger oder Teil eines Längsträgers des Fahrzeugs abgeleitet werden kann.

Die vorliegende Erfindung schafft ferner ein Verfahren zum Erfassen einer Aufprallkraft auf eine Vorrichtung mit einstellbarer Steifigkeit zum Aufnehmen der Aufprallkraft, wobei die Vorrichtung ein Gehäuse mit einer in dem Gehäuse angeordneten ausrückbaren Matrize zum Aufnehmen und Deformieren eines Deformationselements aufweist, wenn das Deformationselement in einer durch die Aufprallkraft bedingten Vorschubrichtung bewegt wird, und wobei das Verfahren den folgenden Schritt aufweist:
Erfassen eines Erreichens oder Überschreitens eines durch eine auf die ausrückbare Matrize wirkende Ausrückkraft bedingten vorbestimmten Verschiebeweges der ausrückbaren Matrize mittels eines angrenzend an die ausrückbare Matrize angeordneten Detektorelements, wobei die Ausrückkraft abhängig von der Aufprallkraft ist.

Das Verfahren kann beispielsweise in Zusammenhang mit einem Steuergerät durchführt werden, das mit der im Vorhergehenden erläuterten Vorrichtung verbunden oder in diese integriert sein kann. Das Überschreiten des vorbestimmten Verschiebeweges und somit der dies bewirkenden vorbestimmten Ausrückkraft kann z. B. erfasst werden, indem das Detektorelement z.B. bei einem Reißen eines mit dem Detektorelement gekoppelten elektrischen Leiters ein Aufprallsignal an das Steuergerät ausgibt. Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuersignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Die Erfindung wird nachstehend anhand der beigefügten Zeichnungen beispielhaft näher erläutert. Es zeigen:
- Fig. 1A bis 1C: Prinzipdarstellungen zur Funktionsweise einer Vorrichtung zum Aufnehmen von Aufprallenergie mit einstellbarer Steifigkeit;
- Fig. 2: einen Längsschnitt einer Vorrichtung zum Aufnehmen von Aufprallenergie mit einstellbarer Steifigkeit, mit einem Detektorelement gemäß einem Ausführungsbeispiel der vorliegenden Erfindung;
- Fig. 3: einen Querschnitt durch die Vorrichtung mit Detektorelement aus Fig. 2;
- Fig. 4: eine Prinzipdarstellung eines Fahrzeugs mit einer Vorrichtung zum Aufnehmen von Aufprallenergie mit einstellbarer Steifigkeit, gemäß einem Ausführungsbeispiel der vorliegenden Erfindung; und
- Fig. 5: ein Ablaufdiagramm eines Verfahrens zum Erfassen einer Aufprallkraft auf eine Vorrichtung mit einstellbarer Steifigkeit zum Aufnehmen der Aufprallkraft, gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

Die im Nachfolgenden erläuterten adaptiven Crashstrukturen können Teile bestehender Vorderwagenstrukturen in Kraftfahrzeugen ersetzten. Beispielsweise können die hierin vorgeschlagenen Strukturen die Crashbox und den vorderen Teil der Längsträger ersetzen.

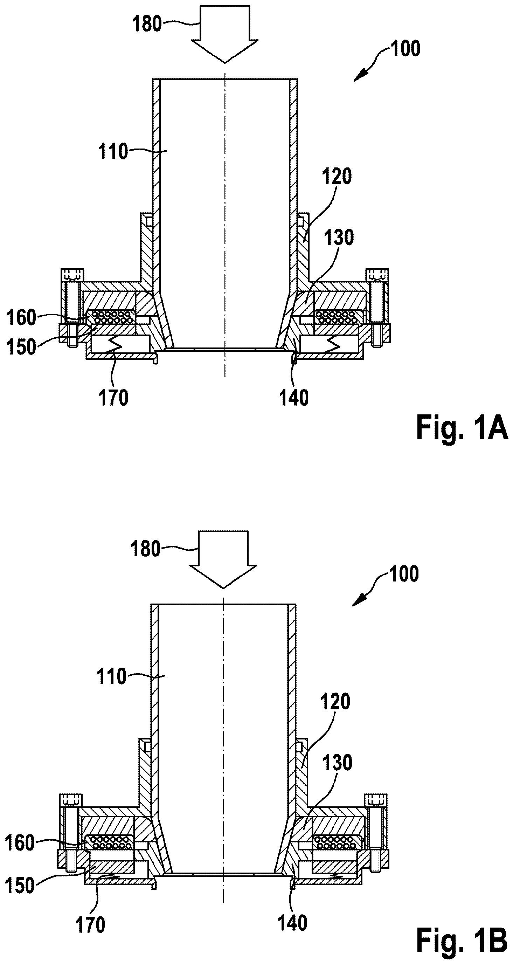

Die Figuren 1A bis 1C zeigen Prinzipdarstellungen zur Funktionsweise einer Vorrichtung 100 zum Aufnehmen von Aufprallenergie mit einstellbarer Steifigkeit, in Form einer adaptive Crashstruktur 100. Die Darstellungen der Figuren 1A bis 1C zeigen jeweils einen Längsschnitt durch die adaptive Crashstruktur 100, wie sie beispielsweise in einen Vorderwagen eines Fahrzeugs installiert sein kann. Die adaptive Crashstruktur 100 umfasst ein Deformationselement 110, das hier als ein Rohr ausgebildet ist, sowie ein Gehäuse 120, in dem eine feste bzw. nicht-ausrückbare Matrize 130 und eine brechbare bzw. ausrückbare Matrize 140 angeordnet sind. Ferner umfasst die Vorrichtung 100 einen innerhalb des Gehäuses 120 verschiebbaren Ring 150 zur Abstützung bzw. Freigabe der ausrückbaren Matrize 140, eine angrenzend an den Ring 150 angeordnete stromführende Spule 160 und ein zwischen dem Ring 150 und einer weiteren Wand des Gehäuses 120 angeordnetes Federelement 170. Eine Aufprallrichtung bzw. Vorschubrichtung 180 des Deformationselements 110 entlang seiner mittels einer Punkt-Strich-Linie gekennzeichneten Längserstreckung ist durch einen Pfeil in der Darstellung gekennzeichnet. Die Punkt-Strich-Linie markiert auch eine Mittelachse der Crashstruktur 100.

Die adaptive Crashstruktur 100 weist in erster Hinsicht zwei Steifigkeiten auf. Die Grundeinstellung der Crashstruktur 100 ist die höhere Steifigkeit, die der eines vorderen Längsträgers des Fahrzeugs entspricht. Die zweite Einstellung, auf die umgeschaltet wird, weist eine geringere Steifigkeit auf. Ebenfalls möglich ist es, die adaptive Crashstruktur 100 weiter hinten in der Frontstruktur einzubauen, d.h. als Ersatz eines hinteren Längsträgers. Die Crashstruktur 100 kann ebenso für das Fahrzeugheck verwendet werden, auch wenn hierin lediglich der Vorderwagen betrachtet wird.

Im Falle hoher Aufprallgeschwindigkeiten und somit hoher Kollisionsenergien ist es vorteilhaft, frühzeitig ein hohes Energieabsorptionsniveau zu erreichen, weshalb die höhere Steifigkeit als Grundeinstellung sinnvoll ist. Im Falle geringer Kollisionsenergien ist eine niedrigere Steifigkeit erforderlich, damit die Crashstruktur 100 durch die geringere eingeleitete Kraft verformt werden kann. Dadurch ergeben sich Vorteile bei der Insassenbelastung in Form einer in der Intensität geringeren, dafür aber längeren Belastung. Die beiden Niveaus werden mithilfe eines Aktuators eingestellt.

Fig. 1A zeigt ein Schnittbild der adaptiven Crashstruktur 100 in Ruhestellung. Hier ist der innerhalb des Gehäuses verschiebbare Ring 150 zwischen der ausrückbaren Matrize 140 und einer Wand des Gehäuses 120 angeordnet, sodass die ausrückbare Matrize 140 abgestützt ist. Bei einer Kollision wird das Rohr bzw. Deformationselement 110 in die feste Matrize 130 und in die brechbare Matrize 140 geschoben und dabei stark verjüngt.

Fig. 1B zeigt ein Schnittbild der adaptiven Crashstruktur 100 in aktuierter Stellung. Hier ist der Ring 150 ansprechend auf einen Stromfluss in der Spule 160 nach unten verschoben. Kommt es nun zu einer Kollision, dringt das Rohr 110 ebenfalls in die feste Matrize 130 und in die brechbare Matrize 140 ein. Da der Ring 150 die brechbare Matrize 140 nicht abstützt, kann diese infolge der Aufprägung der Radialkraft durch das Rohr 110 brechen, z.B. an Sollbruchstellen, und ausrücken. Ein Verjüngungsgrad des Rohrs 110 ist somit verglichen mit der in Fig. 1A gezeigten Grundeinstellung geringer.

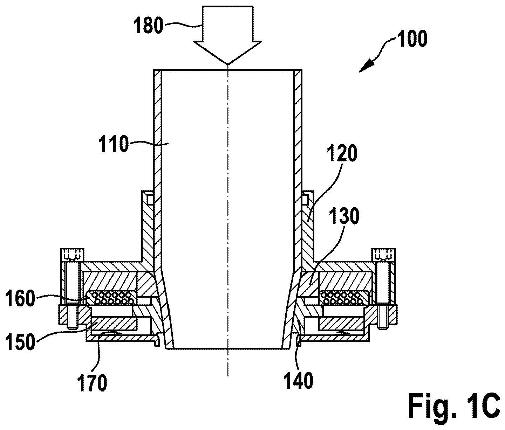

Fig. 1C zeigt ein Schnittbild der adaptiven Crashstruktur 110 im Kollisionsfall, und zwar bei weicher Einstellung, also niedriger Steifigkeit, wie sie anhand der Darstellung in Fig. 1B erläutert ist.

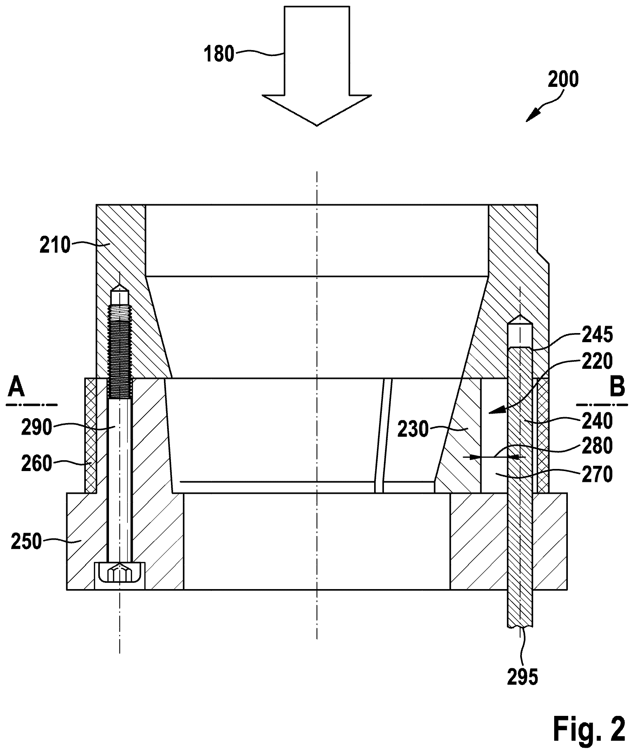

Fig. 2 zeigt in einer Längsschnittdarstellung einen Ausschnitt aus einer Vorrichtung 200 mit einstellbarer Steifigkeit zum Aufnehmen einer Aufprallenergie gemäß einem Ausführungsbeispiel der vorliegenden Erfindung. Die Vorrichtung 200 kann an einer Fahrzeugkarosserie, beispielsweise in einen hinter einer Fahrzeugfront gelegenen Vorderwagen eines Fahrzeugs installiert sein. Die Vorrichtung 200 ist als eine adaptive Crashbox mit einer oberen und unteren Kraftstufe realisiert.

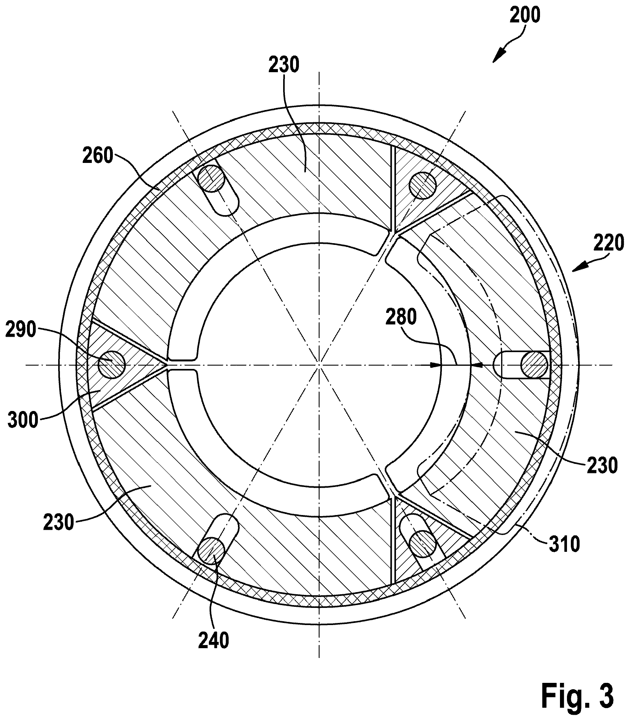

Der Grundaufbau der Vorrichtung 200 entspricht in Anordnung und Funktion der Elemente im Wesentlichen dem der anhand der Figuren 1A, 1B und 1C erläuterten Aufprallstruktur oder Crashstruktur und umfasst eine nicht-ausrückbare Matrize bzw. einen oberen Reduzierring 210 und eine ausrückbare Matrize 220. Die ausrückbare Matrize 220 setzt sich hier aus drei einzeln ausrückbaren Matrizensegmenten 230 zusammen, was aus der nachfolgenden Fig. 3 besser ersichtlich ist. Anstelle des bei der anhand der Figuren 1A, 1B und 1C erläuterten Vorrichtung verwendeten verschiebbaren Ringes wird hier zur radialen Abstützung bzw. Freigabe der beweglichen Matrizensegmente 230 je ein Brechstift 240 mit einer Sollbruchstelle 245 eingesetzt, von denen einer rechts in der Schnittdarstellung in Fig. 2 gezeigt ist. Ferner ruht die ausrückbare Matrize 220 auf einem in der Vorschubrichtung 180 dieser vorgelagerten Stützeinrichtung 250, die hier als ein Stützring ausgeformt ist. Angrenzend an die ausrückbare Matrize 220 ist ein Detektorelement 260 angeordnet. Das Detektorelement 260 ist hier als ein die ausrückbare Matrize 220 umgebender Sensorring bzw. Detektorring mit Sollbruchstellen ausgeführt, was aus der nachfolgenden Fig. 3 besser ersichtlich ist. Der Detektorring 260 umfasst die ausrückbare Matrize 220 vollumfänglich und entspricht in einer Höhe einer Höhe der ausrückbaren Matrize 220. Der Detektorring 260 ist hier als Kunststoffspritzgussteil ausgebildet, das den zusätzlichen Vorteil aufweist, die Segmente 230 im Normalbetrieb in Position zu halten und gegen Umwelteinflüsse zu schützen, indem es einen Ringspalt zwischen dem oberen Reduzierring 210 und dem Stützring 250 verschließt. Das Detektorelement 260 kann auch aus einem beliebigen anderen geeigneten Material gebildet sein.

Aus der Darstellung in Fig. 2 ist ersichtlich, dass die beweglichen Matrizensegmente 230 je eine in vertikaler Richtung verlaufende Nut bzw. ein Langloch oder einen Schlitz 270 aufweisen, in der der jeweilige Brechstift 240 eingesetzt ist. Zwei entgegen einander gerichtete Pfeile markieren einen Abstand zwischen einem Boden der Nut 270 und dem Brechstift 240. Dieser bildet einen freien radialen Verschiebeweg 280 des beweglichen Matrizensegments 230, in dem sich das Matrizensegment 230 radial bewegen kann, ohne in Kontakt mit dem Brechstift 240 zu kommen. Links in der Darstellung in Fig. 2 ist eines von drei Befestigungselementen 290 gezeigt, die in der Stützeinrichtung 250 verankert sind und sich bis in einen Teilbereich des oberen Reduzierrings 210 erstrecken, um diesen abzustützen und zu fixieren. Bei dem in Fig. 2 gezeigten Ausführungsbeispiel der adaptiven Crashstruktur 200 sind die Befestigungselemente 290 als Schrauben ausgeführt. Der Stützring 250 ist mit einer (in Fig. 2 nicht gezeigten) Anschlussgeometrie für einen Längsträger des Fahrzeugs versehen, um einen Teil der Crashkräfte, die auf die Vorrichtung 200 wirken und keine Deformation innerhalb der Vorrichtung 200 bewirken, auf den Längsträger zu übertragen.

In der Fig. 2 ist die Vorrichtung 200 in einer Ruhestellung gezeigt, in der die Vorrichtung 200 auf die obere Kraftstufe, also die hohe Steifigkeit, eingestellt ist. Dabei befinden sich die Brechstifte 240 in einer ersten Position, in der die Bruchstellen 245 nicht auf einer Linie mit einer Grenzfläche der ausrückbaren Matrize 220 liegen. Im Falle einer Kollision sind hier die Matrizensegmente 230 durch die Brechstifte 240 abgestützt, die ausrückbare Matrize 220 rückt nicht aus und bewirkt somit eine Verjüngung des eindringenden Deformationselements.

Ist zu Beginn der Kollision der Detektorring 260 aufgrund der auf die Matrizensegmente 230 wirkenden Ausrückkraft an den Sollbruchstellen gebrochen, so wurde ein entsprechendes Aufprallsignal an ein mit der Crashbox gekoppeltes Steuergerät des Fahrzeugs ausgegeben. Basierend auf dem Aufprallsignal kann entschieden werden, welche Kraftstufe der Vorrichtung 200 einzustellen ist.

In einem Endbereich 295 sind die Brechstifte 240 mit einer in der Darstellung nicht gezeigten Aktuatorik zum Bewegen der Stifte 240 zwischen der ersten und der zweiten Position verbunden. Die Aktuatorik ist mit dem Steuergerät verbunden und kann beispielsweise auf den Prinzipien der Induktion oder der Pyrotechnik basieren. Durch ein Bewegen der Stifte 240 können die Matrizensegmente 230 freigegeben werden und aufgrund der Ausrückkraft weiter ausrücken, wodurch sich die Steifigkeit der Vorrichtung 200 verringert.

Fig. 3 zeigt einen Querschnitt durch den Ausschnitt der adaptiven Crashstruktur 200 aus Fig. 2 entlang einer Linie A-B in der Darstellung in Fig. 2. Die Darstellung in Fig. 3 zeigt die drei einzeln beweglichen Matrizensegmente 230, die in ihrer Gesamtheit die ausrückbare Matrize 220 bilden. Die Matrizensegmente 230 weisen eine identische Form auf und sind gleichmäßig zwischen drei zu einem Mittelpunkt der Crashbox 200 hin spitz zulaufenden Stützstegen 300 angeordnet, die sich zwischen dem - in dieser Darstellung nicht gezeigten - Stützring und dem - ebenfalls in dieser Darstellung nicht gezeigten - oberen Reduzierring der Crashbox 200 erstrecken, um den oberen Reduzierring zu fixieren und abzustützen. Das in Fig. 3 gezeigte Ausführungsbeispiel der adaptiven Crashbox 200 ist so konstruiert, dass sich jeweils ein Brechstift 240 und ein Befestigungselement 290 gegenüberliegen. Die Stege 300 weisen jeweils eine Durchgangsöffnung zum Aufnehmen und Führen der Befestigungselemente 290 auf. Die Stege 300 dienen dazu, einen Teil der Crashkräfte auf den hinter der Crashbox angeordneten Längsträger zu übertragen. Bei dem hier gezeigten Ausführungsbeispiel der Crashstruktur 200 ist der Stützring einstückig mit den Stützstegen 300 gebildet. Alternativ können bei der Herstellung der adaptiven Crashbox 200 die Stützstege 300 als Einzelteile eingesetzt werden, was unter Umständen die Fertigung des Stützringes vereinfacht. Die Segmente 230 stützen sich auf dem Stützring ab, wie aus der Darstellung in Fig. 2 ersichtlich. Die Matrizensegmente 230 weisen einer Form der Stege 300 entsprechende Aussparungen auf. So wird ein Verschieben der Segmente 230 entlang des Verschiebeweges 280 nicht behindert.

Die Segmente 230 werden von dem Detektorring 260 radial gehalten. Der Sensorring 260 weist in der Darstellung in Fig. 3 nicht sichtbare Sollbruchstellen auf, die so ausgeführt sind, dass der Ring 260 reißt bzw. bricht, wenn eine bestimmte minimale Kraft auf das - hier nicht dargestellte in einem lichten Innenbereich der ausrückbaren Matrize 220 angeordnete - Absorberrohr wirkt. Wenn diese Kraft dem unteren Kraftniveau der adaptiven Crashbox 220 entspricht, kann ein Crash erkannt werden. Dazu ist der Detektorring 260 mit einem elektrischen Leiter versehen, der im Falle des Reißens des Detektorrings 260 durchtrennt wird und so ein von dem Steuergerät des Fahrzeugs auswertbares Aufprallsignal erzeugt. Der elektrische Leiter kann beispielsweise durgehend in einem Inneren des Detektorrings 260 verlaufen. In Strichlinien dargestellte Umrisslinien 310 eines der Matrizensegmente 230 kennzeichnen eine beispielhafte maximale mögliche Verschiebung des Matrizensegments 230, bevor der Detektorring 260 reißt. Somit dient der Sensorring 260 zur Erfassung der unteren Kraftstufe einer adaptiven Crashbox 200.

Anders als in den Figuren 2 und 3 gezeigt, kann die brechbare Matrize 220 auch aus mehr oder weniger als drei Segmenten 230 bestehen und die Vorrichtung 200 eine abweichende Anzahl von Stegen 300, Brechstiften 240 und Befestigungselementen 290 aufweisen.

Bei den Ausführungsformen der hierin vorgestellten adaptiven Crashstruktur 200 sind die Segmente 230 und das Absorberrohr stets so ausgebildet, dass das hohe Kraftniveau bei einer radialen Verschiebung über den Verschiebeweg 280 hinaus erreicht wird.

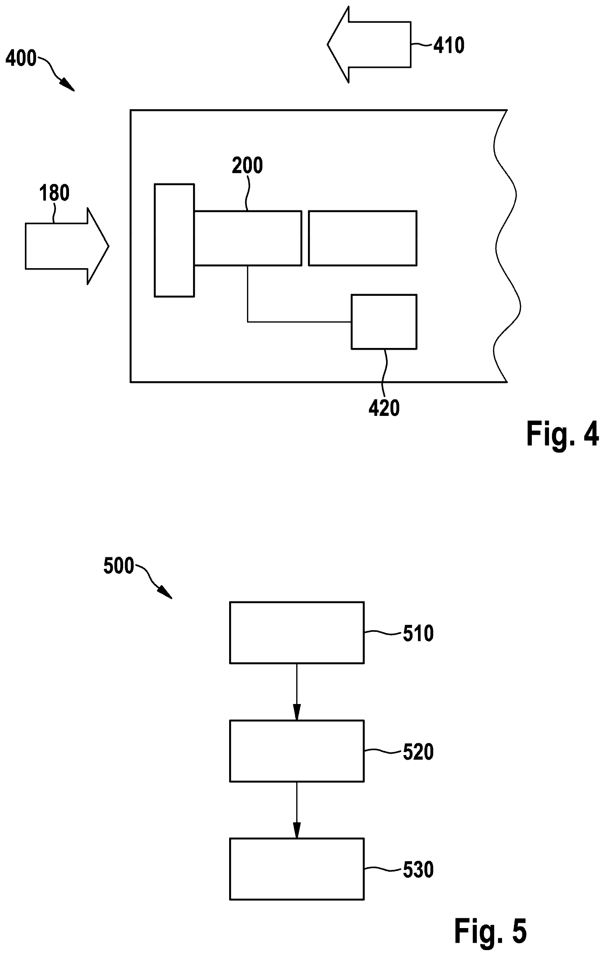

Fig. 4 zeigt eine Prinzipdarstellung eines Fahrzeugs 400 mit der adaptiven Crashstruktur 200, wie sie anhand der vorangegangen Figuren erläutert wurde. Gezeigt ist eine Frontstruktur des Fahrzeugs 400. Diese umfasst einen Querträger und daran anschließend die Vorrichtung 200, die hier den vorderen Längsträger ersetzt. Auch ein Ersatz des hinteren Längsträgers durch die Vorrichtung 200 ist möglich. Ferner kann die Crashstruktur 200 zusätzlich oder alternativ in einem Heck des Fahrzeugs 400 implementiert sein. Ein Pfeil kennzeichnet eine Fahrtrichtung 410 des Fahrzeugs 400. Ein weiterer Pfeil kennzeichnet die Vorschubrichtung 180, in der bei einer Kollision des Fahrzeugs 400, z.B. in Form eines Frontal- oder Schrägaufpralls, die Aufprallenergie zu absorbieren ist, und in der dementsprechend ein in Fig. 4 nicht gezeigtes Deformationselement der Vorrichtung 200 in der Vorrichtung 200 bewegt wird, um durch Deformation die Aufprallenergie zu absorbieren. Über ein Leitungssystem, z.B. einen CAN-Bus, ist die Crashstruktur 200 mit einem Steuergerät 420 des Fahrzeugs 400 gekoppelt. Das Steuergerät 420 empfängt bei einem Crash des Fahrzeugs 400 ein Aufprallsignal von der Vorrichtung 200, ermittelt anschließend eine Kollisionsschwere und gibt entsprechende Ansteuerbefehle an einen Aktuator der Vorrichtung 200 zum Abstützen bzw. Freigeben der ausrückbaren Matrize der Vorrichtung aus.

Fig. 5 zeigt ein Ablaufdiagramm eines Ausführungsbeispiels eines Verfahrens zum Erfassen einer Aufprallkraft auf eine Vorrichtung mit einstellbarer Steifigkeit zum Aufnehmen der Aufprallkraft des Fahrzeugs, wie sie im Vorhergehenden ausführlich erläutert wurde. Das Verfahren 500 wird in Zusammenhang mit einem Steuergerät des Fahrzeugs, das mit der Vorrichtung elektrisch verbunden ist, durchgeführt, wobei die Vorrichtung ein Gehäuse mit einer in dem Gehäuse angeordneten ausrückbaren Matrize zum Aufnehmen und Deformieren eines Deformationselements aufweist.

In einem Schritt 510 wird ein Überschreiten eines vorbestimmten Verschiebeweges der ausrückbaren Matrize erfasst und mittels eines Aufprallsignals an das Steuergerät übermittelt. Dem vorbestimmten Verschiebeweg ist eine vorbestimmte Ausrückkraft und damit verbunden eine vorbestimmte Aufprallkraft zugeordnet. Daher kann in einem folgenden Schritt 520 eine Schwere des Aufpralls bzw. der Kollision des Fahrzeugs ansprechend auf das Empfangen des Aufprallsignals ermittelt werden. In einem Schritt 530 wird in Abhängigkeit von der Kollisionsschwere eine Aktuatorik der Vorrichtung angesteuert, um Brechstifte der ausrückbaren Matrize aus einer ersten Position, in der die Brechstifte die ausrückbare Matrize abstützen, in eine zweite Position zu bewegen, in der sie durch ein Brechen an einer Sollbruchstelle die Matrize zum Ausrücken freigeben. Entsprechend wird die Vorrichtung in dem Schritt 530 aus einer Ruhestellung bzw. Grundeinstellung, in der eine obere Kraftstufe und hohe Steifigkeit vorliegt, in eine untere Kraftstufe verbracht, in der die Steifigkeit entsprechend herabgesetzt ist.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

## Patentansprüche

1. Vorrichtung (200) mit einstellbarer Steifigkeit zum Aufnehmen einer Aufprallkraft, wobei die Vorrichtung ein Gehäuse mit einer in dem Gehäuse angeordneten ausrückbaren Matrize (220) zum Aufnehmen und Deformieren eines Deformationselements aufweist, wenn das Deformationselement in einer durch die Aufprallkraft bedingten Vorschubrichtung (180) bewegt wird, **dadurch gekennzeichnet, dass** die Vorrichtung das folgende Merkmal aufweist:
ein angrenzend an die ausrückbare Matrize angeordnetes Detektorelement (260) zum Erfassen eines Erreichens oder Überschreitens eines durch eine auf die ausrückbare Matrize wirkende Ausrückkraft bedingten vorbestimmten Verschiebeweges (280) der ausrückbaren Matrize.

2. Vorrichtung (200) gemäß Anspruch 1, bei der das Detektorelement (260) ausgebildet ist, um ansprechend auf das Erreichen oder Überschreiten des vorbestimmten Verschiebeweges (280) aufgrund einer vorbestimmten Ausrückkraft ein Aufprallsignal auszugeben.

3. Vorrichtung (200) gemäß Anspruch 2, bei der das Detektorelement (260) einen elektrischen Leiter aufweist, der ausgebildet ist, um das Aufprallsignal durch ein Reißen bei dem Erreichen oder Überschreiten des vorbestimmten Verschiebeweges (280) zu erzeugen.

4. Vorrichtung (200) gemäß einem der vorangegangenen Ansprüche, bei der das Detektorelement (260) als ein die ausrückbare Matrize (220) vollumfänglich umgebender Detektorring mit mindestens einer Sollbruchstelle ausgebildet ist, wobei der Detektorring ausgebildet ist, um bei dem Erreichen oder Überschreiten des vorbestimmten Verschiebeweges (280) an der Sollbruchstelle zu brechen.

5. Vorrichtung (200) gemäß einem der vorangegangenen Ansprüche, die ferner zumindest einen sich in der Vorschubrichtung (180) erstreckenden Brechstift (240) zum Abstützen bzw. Freigeben der ausrückbaren Matrize (220) aufweist, wobei der Brechstift in zumindest einer sich in der Vorschubrichtung in einem Außenbereich der ausrückbaren Matrize erstreckenden Nut (270) angeordnet ist, wobei ein Abstand zwischen dem Brechstift und einem Boden der Nut in einer Grundstellung der Vorrichtung größer oder gleich einer Länge des vorbestimmten Verschiebeweges (280) ist.

6. Vorrichtung (200) gemäß Anspruch 5, bei der die ausrückbare Matrize (220) durch eine Mehrzahl von zueinander beweglichen, ausrückbaren Matrizensegmenten (230) mit je einer sich in der Vorschubrichtung (180) in einem Außenbereich des ausrückbaren Matrizensegments erstreckenden Nut (270) gebildet ist, wobei die Vorrichtung ferner eine der Mehrzahl von Matrizensegmenten entsprechende Mehrzahl von Brechstiften (240) aufweist, von denen jeder in einer Nut eines der Matrizensegmente angeordnet ist.

7. Vorrichtung (200) gemäß einem der vorangegangenen Ansprüche, die ferner eine Stützeinrichtung (250) und eine nicht-ausrückbare Matrize (210) aufweist, wobei die nicht-ausrückbare Matrize, die ausrückbare Matrize (220) und die Stützeinrichtung in der Vorschubrichtung (180) aufeinanderfolgend in dem Gehäuse angeordnet sind, und wobei die Stützeinrichtung zumindest ein sich zwischen der Stützeinrichtung und der nicht-ausrückbaren Matrize erstreckendes Befestigungselement (290) zum Befestigen der nicht-ausrückbaren Matrize an der Stützeinrichtung und eine Anschlussgeometrie zum Übertragen zumindest eines Teils der Aufprallkraft auf einen der Stützeinrichtung in der Vorschubrichtung nachgelagerten Fahrzeuglängsträger aufweist.

8. Verfahren (500) zum Erfassen einer Aufprallkraft auf eine Vorrichtung (200) mit einstellbarer Steifigkeit zum Aufnehmen der Aufprallkraft, wobei die Vorrichtung ein Gehäuse mit einer in dem Gehäuse angeordneten ausrückbaren Matrize zum Aufnehmen und Deformieren eines Deformationselements aufweist, wenn das Deformationselement in einer durch die Aufprallkraft bedingten Vorschubrichtung (180) bewegt wird, und wobei das Verfahren den folgenden Schritt aufweist:
Erfassen (510) eines Erreichens oder Überschreitens eines durch eine auf die ausrückbare Matrize wirkende Ausrückkraft bedingten vorbestimmten Verschiebeweges (280) der ausrückbaren Matrize mittels eines angrenzend an die ausrückbare Matrize angeordneten Detektorelements (260).

9. Steuergerät (420), das ausgebildet ist, um den Schritt eines Verfahrens (500) gemäß Anspruch 8 durchzuführen.

10. Computer-Programmprodukt mit Programmcode zur Durchführung eines Verfahrens (500) nach Anspruch 8, wenn das Programm auf einem Steuergerät (420) ausgeführt wird.

## Claims

1. Device (200) with adjustable rigidity for absorbing an impact force, wherein the device has a housing with a disengageable die (220) arranged in the housing to hold and deform a deformation element when the deformation element is moved in a feed direction (180) caused by the impact force, **characterized in that**
the device has the following feature:
a detector element (260) arranged adjacent to the disengageable die in order to detect reaching or exceeding a predetermined displacement travel (280) of the disengageable die that is caused by a disengagement force acting on the disengageable die.

2. Device (200) according to Claim 1, in which the detector element (260) is designed to output an impact signal in response to reaching or exceeding the predetermined displacement travel (280) on account of a predetermined disengagement force.

3. Device (200) according to Claim 2, in which the detector element (260) has an electric conductor which is designed to generate the impact signal as a result of breaking when the predetermined displacement travel (280) is reached or exceeded.

4. Device (200) according to one of the preceding claims, in which the detector element (260) is formed as a detector ring surrounding the entire circumference of the disengageable die (220) and having at least one predetermined breaking point, wherein the detector ring is designed to break at the predetermined breaking point when the predetermined displacement travel (280) is reached or exceeded.

5. Device (200) according to one of the preceding claims, which additionally has at least one breaker pin (240) extending in the feed direction (180) for supporting or releasing the disengageable die (220), wherein the breaker pin is arranged in at least one groove (270) extending in the feed direction in an outer region of the disengageable die, wherein a distance between the breaker pin and a base of the groove in a basic position of the device is greater than or equal to a length of the predetermined displacement travel (280).

6. Device (200) according to Claim 5, in which the disengageable die (220) is formed by a multiplicity of disengageable die segments (230) that can be moved towards one another and each have a groove (270) extending in the feed direction (180) in an outer region of the disengageable die segments, wherein the device also has a multiplicity of breaker pins (240) corresponding to the multiplicity of die segments, each of which is arranged in a groove of one of the die segments.

7. Device (200) according to one of the preceding claims, which also has a supporting unit (250) and a non-disengageable die (210), wherein the non-disengageable die, the disengageable die (220) and the supporting unit are arranged following one another in the feed direction (180) in the housing, and wherein the supporting unit has at least one fixing element (290) extending between the supporting unit and the non-disengageable die to fix the non-disengageable die to the supporting unit, and a connecting geometry for transferring at least part of the impact force to a vehicle longitudinal member placed downstream of the supporting unit in the feed direction.

8. Method (500) for detecting an impact force on a device (200) with adjustable rigidity for absorbing the impact force, wherein the device has a housing with a disengageable die arranged in the housing to hold and deform a deformation element when the deformation element is moved in a feed direction (180) caused by the impact force, and wherein the method has the following step:
detecting (510) reaching or exceeding a predetermined displacement travel (280) of the disengageable die that is caused by a disengagement force acting on the disengageable die by means of a detector element (260) arranged adjacent to the disengageable die.

9. Control device (420) which is designed to carry out the step of a method (500) according to Claim 8.

10. Computer program product having program code for carrying out a method (500) according to Claim 8 when the program is executed on a control device (420).

## Revendications

1. Dispositif ayant une raideur réglable (200) pour recevoir une force d'impact, dans lequel le dispositif comprend un boîtier ayant une matrice débrayable (220) disposée dans le boîtier pour recevoir et déformer un élément de déformation lorsque l'élément de déformation est déplacé dans une direction d'avance (180) déterminée par la force d'impact,
**caractérisé en ce que** le dispositif présente la caractéristique suivante :
un élément détecteur (260) disposé de manière adjacente à la matrice débrayable pour détecter le fait qu'une trajectoire de déplacement prédéterminée (280) de la matrice débrayable, déterminée par une force de débrayage agissant sur la matrice débrayable, est atteinte ou dépassée.

2. Dispositif (200) selon la revendication 1, dans lequel l'élément détecteur (260) est conçu pour délivrer un signal d'impact en réponse au fait que la trajectoire de déplacement prédéterminée (280) est atteinte ou dépassée du fait d'une force de débrayage prédéterminée.

3. Dispositif (200) selon la revendication 2, dans lequel l'élément détecteur (260) comprend un conducteur électrique conçu pour générer le signal d'impact par rupture lorsque la trajectoire de déplacement prédéterminée (280) est atteinte ou dépassée.

4. Dispositif (200) selon l'une des revendications précédentes, dans lequel l'élément détecteur (260) est réalisé sous la forme d'un anneau détecteur qui entoure entièrement la matrice débrayable (220) et qui présente au moins un point de rupture prédéterminé, dans lequel l'anneau détecteur est conçu pour se rompre au point de rupture prédéterminé lorsqu'une trajectoire de déplacement prédéterminée (280) est atteinte ou dépassée.

5. Dispositif (200) selon l'une des revendications précédentes, comprenant en outre au moins une broche de rupture (240) s'étendant dans la direction d'avance (180) pour supporter ou libérer la matrice débrayable (220), dans lequel la broche de rupture est disposée dans au moins une rainure (270) s'étendant dans la direction d'avance dans une zone extérieure de la matrice débrayable, dans lequel une distance entre la broche de rupture et un fond de la rainure, à une position de base du dispositif, est supérieure ou égale à une longueur de la trajectoire de déplacement prédéterminée (280).

6. Dispositif (200) selon la revendication 5, dans lequel la matrice débrayable (220) est formée par une pluralité de segments de matrice débrayables et mutuellement mobiles (230) qui présentent chacun une rainure (270) s'étendant dans la direction d'avance (180) dans une région extérieure du segment de matrice débrayable, dans lequel le dispositif comprend en outre une pluralité de broches de rupture (240) correspondant à la pluralité de segments de matrice, dont chacune est disposée dans une rainure de l'un des segments de matrice.

7. Dispositif (200) selon l'une des revendications précédentes, comprenant en outre un moyen de support (250) et une matrice non débrayable (210), dans lequel la matrice non débrayable, la matrice débrayable (220) et le moyen de support sont disposés successivement dans le boîtier dans la direction d'avance (180), et dans lequel le moyen de support comprend au moins un élément de fixation (290) s'étendant entre le moyen de support et la matrice non débrayable pour fixer la matrice non débrayable au moyen de support et présente une géométrie de raccordement permettant de transmettre au moins partiellement l'impact à un longeron de véhicule situé en aval du moyen de support dans la direction d'avance.

8. Procédé (500) pour détecter une force d'impact sur un dispositif (200) ayant une raideur réglable pour recevoir la force d'impact, dans lequel le dispositif comprend un boîtier comportant une matrice débrayable disposée dans le boîtier pour recevoir et déformer un élément de déformation lorsque l'élément de déformation est déplacé dans une direction d'avance (180) déterminée par la force d'impact, et dans lequel le procédé comprend l'étape consistant à :
détecter (510) le fait qu'une trajectoire de déplacement prédéterminée (280) de la matrice débrayable, déterminée par une force de débrayage agissant sur la matrice débrayable, est atteinte ou dépassée au moyen d'un élément détecteur (260) disposé de manière adjacente à la matrice débrayable.

9. Appareil de commande (420) conçu pour mettre en oeuvre l'étape d'un procédé (500) selon la revendication 8.

10. Produit de programme d'ordinateur comportant un code de programme destiné à mettre en oeuvre un procédé (500) selon la revendication 8 lorsque le programme est exécuté sur un appareil de commande (420).
